# EUROPEAN PATENT APPLICATION

(11) **EP 4 657 647 A1**
(43) Date of publication of application: **03.12.2025**
(21) Application number: 24856821.4
(22) Date of filing: 22.08.2024
(51) Int. Cl.: H01M 50/583, H01M 50/586, H01M 50/559, H01M 50/566, H01M 50/591, H01M 50/213, H01M 50/249

(54) **BATTERY, BATTERY PACK COMPRISING SAME, AND VEHICLE COMPRISING BATTERY PACK**

(30) Priority: 22.08.2023 KR 20230110068
(71) Applicant: LG Energy Solution, Ltd., Seoul 07335 (KR)
(72) Inventor: SON, Jong-In, Daejeon 34122 (KR)
(74) Representative: Goddar, Heinz J.
(86) International application number: PCT/KR2024/012490
(87) International publication number: WO 2025/042210

(57) **Abstract**

Disclosed is a battery, which includes an electrode assembly; a battery housing configured to accommodate the electrode assembly through an open portion formed at one side thereof; a battery terminal configured to be electrically connected to the electrode assembly through a closed portion formed at a side opposite to the open portion of the battery housing; and a current collector having a first coupling portion electrically coupled to the electrode assembly and a second coupling portion electrically coupled to the battery terminal and having a resistance increasing region formed in at least a part thereof.

## Description

### TECHNICAL FIELD

The present disclosure relates to a battery, a battery pack including the same, and a vehicle including the battery pack.

This application is based on and claims priority from Korean Patent Application No. 10-2023-0110068, filed on August 22, 2023, with the Korean Intellectual Property Office, the disclosure of which is incorporated herein in its entirety by reference.

### BACKGROUND ART

Fuse devices currently used in secondary batteries include PTC thermistors (positive temperature coefficient thermistor) and TCO (thermal cut-out). However, PTC or TCO have the disadvantage that their resistance increases as the operation is repeated, thereby increasing the overall resistance in the circuit.

Also, the devices mentioned above are all operated by heat generation due to overcurrent. In other words, the devices mentioned above correspond to devices that operate to block the flow of current only when overcurrent is generated in the circuit current path due to overcharging or the like and thus the temperature rises resultantly.

Therefore, the devices mentioned above may operate and block overcurrent only after safety has already threatened due to heat generation, and is not able to block overcurrent immediately when a cause for temperature rise occurs. Even if the internal pressure increases due to an abnormal temperature rise inside the secondary battery, safety problems such as ignition or explosion may occur if overcurrent is not blocked at the appropriate time.

In addition, since the devices mentioned above simply operate depending on temperature, these devices it is difficult to use these devices in high-output secondary batteries, such as secondary batteries for battery packs used in vehicles. In other words, a battery pack for a vehicle requires a high c-rate and accordingly generates a large amount of heat. However, devices such as PTC thermistors (positive temperature coefficient thermistor), TCO (thermal cut-out), and thermal fuses have the problem that they may operate prematurely when placed in such a high temperature environment.

Therefore, there is needed a secondary battery with a structure that may be used even in environments where high currents flow, and may block current in advance when events that may cause a temperature rise (for example, an increase in the internal pressure of a secondary battery) occurs before the temperature rises to a level that may cause a safety problem.

### DISCLOSURE

### Technical Problem

The present disclosure is designed to solve the problems of the related art, and therefore the present disclosure is directed to rapidly cutting off electrical connection in the event that an overcurrent exceeding a standard value occurs in a battery.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery comprising: an electrode assembly; a battery housing configured to accommodate the electrode assembly through an open portion formed at one side thereof; a battery terminal configured to be electrically connected to the electrode assembly through a closed portion formed at a side opposite to the open portion of the battery housing; and a current collector having a first coupling portion electrically coupled to the electrode assembly and a second coupling portion electrically coupled to the battery terminal and having a resistance increasing region formed in at least a part thereof.

The resistance increasing region may be configured to have a smaller cross-sectional area compared to the remaining region of the second coupling portion.

The resistance increasing region may be configured to have a thinner thickness compared to the remaining region of the second coupling portion.

The resistance increasing region may include a groove line formed on one surface or both surfaces of the second coupling portion.

The groove line may extend along a circumferential direction of the battery.

The resistance increasing region may include a plurality of groove lines formed on one surface or both surfaces of the second coupling portion. The plurality of groove lines may be spaced apart from each other along a radial direction of the battery.

The plurality of groove lines may be spaced apart from each other along a circumferential direction of the battery.

A welding portion may be provided in a region where the second coupling portion and the battery terminal are coupled. The welding portion may be provided in a region where the resistance increasing region is not formed.

The resistance increasing region may be configured to surround the welding portion.

The electrode assembly may have a structure in which a stack including a first electrode, a second electrode, and a separator interposed between the first electrode and the second electrode is wound. The resistance increasing region may be provided at a position corresponding to an inner side of a winding center hole formed due to winding of the electrode assembly.

The battery may further comprise a protection member configured to cover an inner wall surface of the winding center hole at an entrance of the winding center hole facing the current collector.

The first coupling portion and the second coupling portion of the current collector may be positioned apart from each other along a radial direction of the battery.

The current collector may include a rim portion positioned on an outer periphery of the first coupling portion and the second coupling portion; and a connection portion configured to connect the rim portion and the second coupling portion.

In another aspect of the present disclosure, there is also provided a battery pack, comprising: the battery according to an embodiment of the present disclosure.

In another aspect of the present disclosure, there is also provided a vehicle, comprising the battery pack according to an embodiment of the present disclosure.

### Advantageous Effects

According to one aspect of the present disclosure, when an overcurrent exceeding a standard value occurs in a battery, the electrical connection may be quickly cut off, thereby ensuring the safety of battery use.

However, the advantageous effects that can be derived through the present disclosure are not limited to the effects described above, and other advantageous effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing the structure of an upper portion of a battery according to an embodiment of the present disclosure.
FIG. 2 is a drawing showing a resistance increasing region provided in a current collector (first current collector) according to an embodiment of the present disclosure.
FIG. 3 is a cross-sectional view taken along line A-A' of FIG. 2.
FIGS. 4 and 5 are drawings showing exemplary forms of the resistance increasing region of the present disclosure.
FIGS. 6 and 7 are drawings showing the positional relationship of the resistance increasing region provided in the current collector (first current collector) according to an embodiment of the present disclosure and a welding portion formed in a current collector.
FIG. 8 is a drawing for explaining the formation position of the resistance increasing region of the present disclosure.
FIG. 9 is a drawing showing a battery to which the protection member of the present disclosure is applied.
FIG. 10 is a drawing showing an exemplary form of the current collector (first current collector) of the present disclosure.
FIG. 11 is a drawing showing the structure of a lower portion of the battery according to an embodiment of the present disclosure.
FIG. 12 is a diagram showing a battery pack according to an embodiment of the present disclosure.
FIG. 13 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

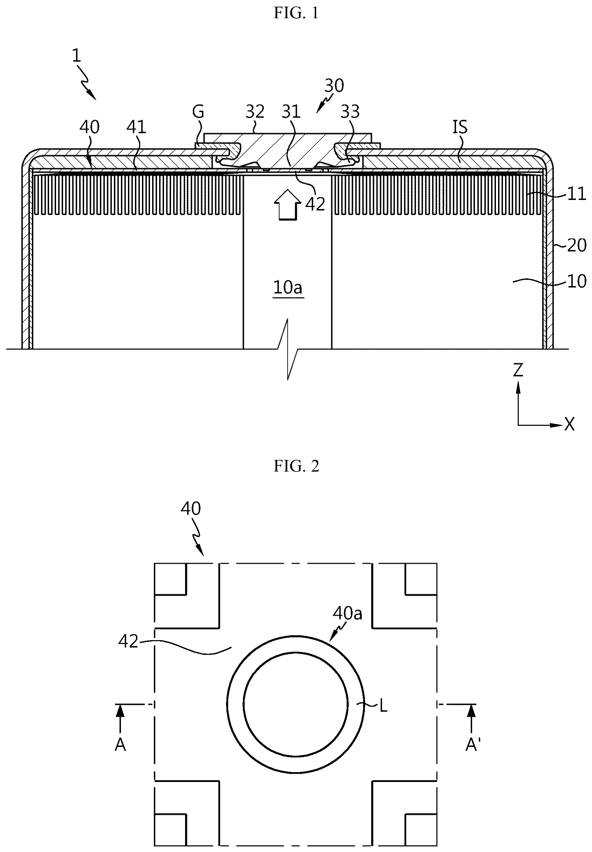

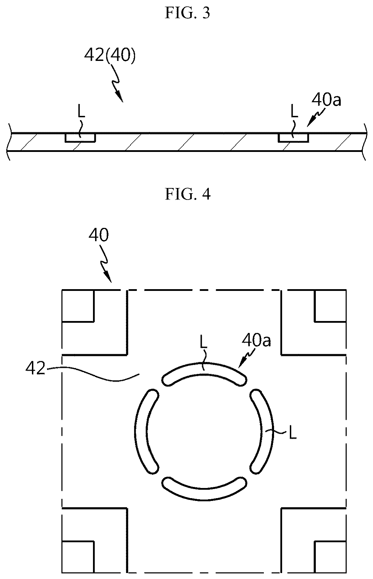

First, a battery 1 according to an embodiment of the present disclosure will be described with reference to FIGS. 1 to 3. FIG. 1 is a diagram showing the structure of an upper portion of a battery according to an embodiment of the present disclosure. FIG. 2 is a drawing showing a resistance increasing region provided in a current collector (first current collector) according to an embodiment of the present disclosure. FIG. 3 is a cross-sectional view taken along line A-A' of FIG. 2.

Referring to FIGS. 1 to 3, the battery 1 according to an embodiment of the present disclosure may include an electrode assembly 10, a battery housing 20, a battery terminal 30, and a current collector (first current collector) 40. The battery 1 may be a secondary battery configured to be capable of charging and discharging. The battery 1 may be, for example, a cylindrical battery.

The electrode assembly 10 may include a first electrode having a first polarity, a second electrode having a second polarity opposite to the first polarity, and a separator interposed between the first electrode and the second electrode. The electrode assembly 10 may have a form in which a stack including the first electrode, the second electrode, and the separator is wound in one direction. When the electrode assembly 10 has such a wound form, a winding center hole 10a may be formed in a region that becomes a winding center.

The first electrode may include a first uncoated portion 11, which is a region on which an electrode active material is not coated. The first uncoated portion 11 may extend along a winding direction of the electrode assembly 10 from one end of the first electrode. Accordingly, the first uncoated portion 11 may be provided on a first surface that is approximately perpendicular to an outer circumference of the electrode assembly 10.

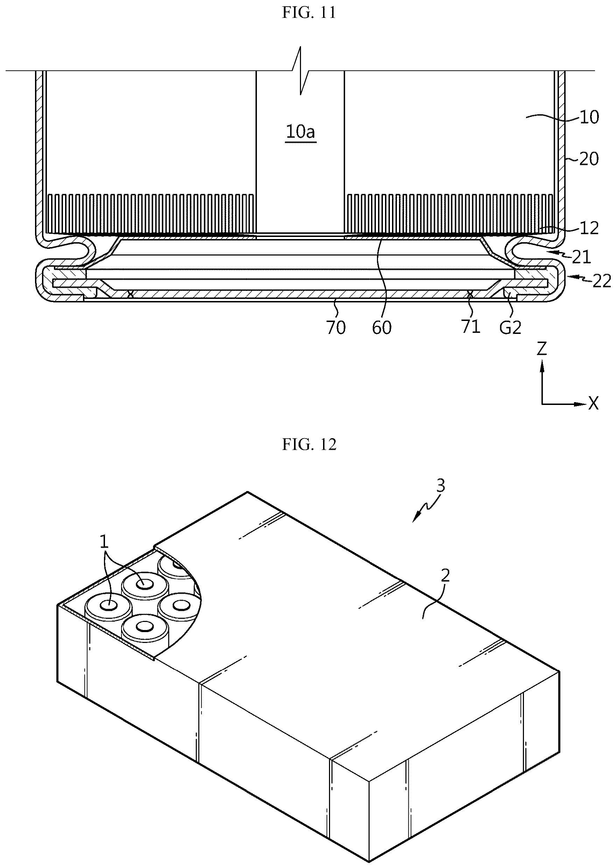

The second electrode may include a second uncoated portion 12, which is a region on which an electrode active material is not coated (see FIG. 11). The second uncoated portion 12 may extend along the winding direction of the electrode assembly 10 from one end of the second electrode. Accordingly, the second uncoated portion 12 may be provided on a second surface (a surface located on a side opposite to the first surface) that is approximately perpendicular to the outer circumference of the electrode assembly 10.

Although not specifically illustrated in the drawings, the first uncoated portion 11 and/or the second uncoated portion 12 may include a plurality of segments formed by dividing along the winding direction of the electrode assembly 10. The segments may be formed by notching the first uncoated portion 11 and/or the second uncoated portion 12 to a predetermined depth. The plurality of segments may be bent approximately along the radial direction of the electrode assembly 10. In this case, some of the segments adjacent to each other along the radial direction may overlap each other.

The battery housing 20 may be configured to accommodate the electrode assembly 10 through an open portion formed at one side thereof. The battery housing 20 may have a closed portion formed at a side opposite to the open portion. The battery housing 20 may include a conductive metal. The battery housing 20 may be electrically connected to the second electrode of the electrode assembly 10.

The battery terminal 30 may be configured to be electrically connected to the electrode assembly 10 through the closed portion provided at a side opposite to the open portion of the battery housing 20. The battery terminal 30 may be electrically connected to, for example, the first electrode of the electrode assembly 10. In this case, the battery terminal 30 may function as a first terminal of the battery 1. The battery terminal 30 and the battery housing 20 may have opposite polarities, and in this case, a first sealing member G1 may be provided between the battery housing 20 and the battery terminal 30 to prevent contact between these parts and to secure sealing of the battery housing 20.

The battery terminal 30 may include a first portion 31 and a second portion 32. The first portion 31 may be configured to be electrically coupled to the current collector 40 at the inner side of the battery housing 20. The first portion 31 may be provided at a position corresponding to the winding center hole 10a of the electrode assembly 10. The second portion 32 may be exposed to the outside of the battery housing 20. The second portion 32 may be located at approximately the center of the closed portion of the battery housing 20. The battery terminal 30 may include a third portion 33 provided at the outer side of the first portion 31. The third portion 33 may be riveted toward the closed portion of the battery housing 20 to fix the battery terminal 30 to the battery housing 20.

The current collector 40 may be configured to electrically connect the battery terminal 30 and the electrode assembly 10. The current collector 40 may be electrically connected to the first electrode of the electrode assembly 10. An insulator IS may be interposed between the current collector 40 and an inner surface of the closed portion of the battery housing 20 to prevent contact between the battery housing 20 and the current collector 40 having opposite polarities.

The current collector 40 may be disposed on the first surface of the electrode assembly 10. The current collector 40 may include a first coupling portion 41 and a second coupling portion 42. The first coupling portion 41 may be configured to be electrically coupled with the electrode assembly 10. The first coupling portion 41 may be coupled with the first uncoated portion 11 of the electrode assembly 10. The first coupling portion 41 may be coupled on a coupling surface formed by bending the first uncoated portion 11. At least a part of the first coupling portion 41 may be coupled with the first uncoated portion 11 in a region where the number of overlapping layers of the segments of the first uncoated portion 11 is maximized. The second coupling portion 42 may be electrically coupled with the battery terminal 30. The second coupling portion 42 may be electrically coupled with the first portion 31 of the battery terminal 30. The second coupling portion 42 may be welded to the first portion 31 of the battery terminal 30 by a welding tool inserted through the winding center hole 10a of the electrode assembly 10 or by a laser irradiated through the winding center hole 10a.

Meanwhile, the second coupling portion 42 may have a resistance increasing region 40a formed at least in a part thereof. At least in a part of the resistance increasing region 40a may be located within a region where the battery terminal 30 and the current collector 40 are in contact with each other. The resistance increasing region 40a may be configured to have a smaller cross-sectional area compared to the remaining region of the second coupling portion 42. The resistance increasing region 40a may be configured to have a thinner thickness compared to the remaining region of the second coupling portion 42, for example, as illustrated in FIG. 3.

In this way, since the battery 1 of the present disclosure is configured to have a region where resistance partially increases on the current collector 40, when overcurrent occurs due to an abnormality in the battery 1, the overcurrent may be quickly blocked through rupture of the current collector 40 itself and/or damage to the coupling portion of the current collector 40 and battery terminal 30.

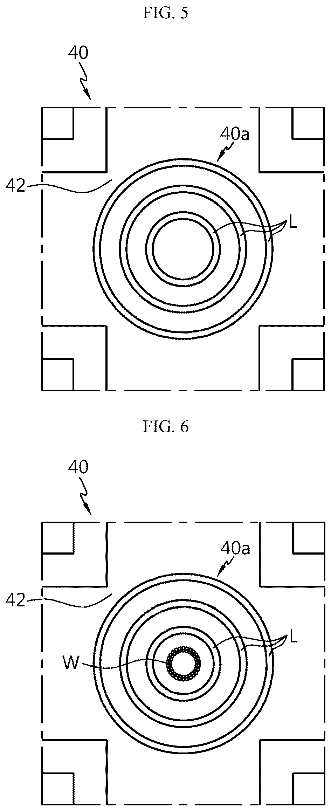

Next, various embodiments of the resistance increasing region 40a of the present disclosure will be described with reference to FIGS. 4 and 5 along with FIGS. 1 to 3. FIGS. 4 and 5 are drawings showing a resistance increasing region provided in a current collector (first current collector) according to an embodiment of the present disclosure, which show various embodiments of a groove line constituting the resistance increasing region.

Referring to FIGS. 4 and 5 along with FIGS. 1 to 3, the resistance increasing region 40a may include a groove line L formed on one surface or both surfaces of the second coupling portion 42 of the current collector 40. The groove line L may be formed at a predetermined depth on one surface or both surfaces of the second coupling portion 42. The groove line L may extend along the circumferential direction of the battery 1. The groove line L may be provided in an approximately closed loop shape. The resistance region 40a may include a plurality of groove lines L. The plurality of groove lines L may be arranged to be spaced apart from each other along the circumferential direction of the battery. The plurality of groove lines L may be arranged to be spaced apart from each other along the radial direction of the battery 1.

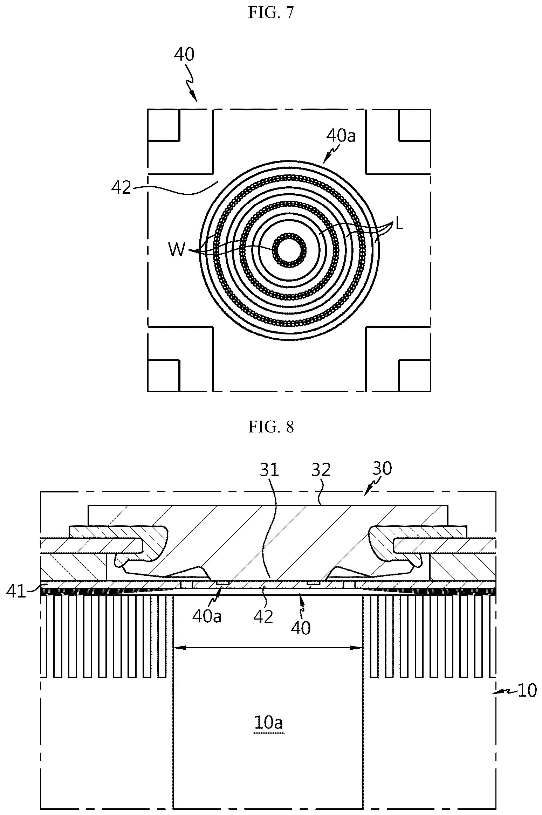

Next, the positional relationship of the resistance increasing region 40a and the welding portion W of the present disclosure will be described with reference to FIGS. 6 and 7 along with FIGS. 1 to 3. FIGS. 6 and 7 are drawings showing the positional relationship of the resistance increasing region provided in the current collector (first current collector) according to an embodiment of the present disclosure and a welding portion formed in a current collector.

Referring to FIGS. 6 and 7 along with FIGS. 1 to 3, a welding portion W may be provided in a region where the second coupling portion 42 of the current collector 40 of the present disclosure and the battery terminal 30 are coupled. The welding portion W may be provided in a region where the resistance increasing region 40a is not formed. According to this configuration, when welding is performed for coupling between the battery terminal 30 and the current collector 40, it is possible to prevent the groove line L constituting the resistance increasing region 40a from melting and thus the cross-sectional area decreasing region from being removed.

The resistance increasing region 40a may be configured to surround the welding portion W. For example, when the resistance increasing region 40a includes a groove line L having an approximately closed loop shape, the welding portion W may be located within a space surrounded by the groove line L. In another aspect, the welding portion W may be located between adjacent groove lines L that are spaced apart from each other as illustrated in FIG. 7. When the welding portion W and the resistance increasing region 40a are arranged in this manner, a current flowing from the battery terminal 30 to the electrode assembly 10 through the current collector 40 passes through the resistance increasing region 40a in the current collector 40. Therefore, when an overcurrent occurs, a rapid rupture may occur in the resistance increasing region 40a, thereby improving the safety in use of the battery 1.

Next, the relative positional relationship between the resistance increasing region 40a of the present disclosure and the electrode assembly 10 will be explained with reference to FIG. 8. FIG. 8 is a drawing for explaining the formation position of the resistance increasing region of the present disclosure.

Referring to FIG. 8, the resistance increasing region 40a of the present disclosure may be located within a region corresponding to the inner side of the winding center hole 10a formed due to the winding of the electrode assembly 10. That is, the resistance increasing region 40a may be arranged within a region indicated by an arrow in FIG. 8. According to this configuration, even if an overcurrent occurs during the use of the battery 1 so that a rupture occurs in the resistance increasing region 40a, foreign matter caused by the rupture may fall through the winding center hole 10a, thereby minimizing the possibility of foreign matter being introduced into the electrode assembly 10.

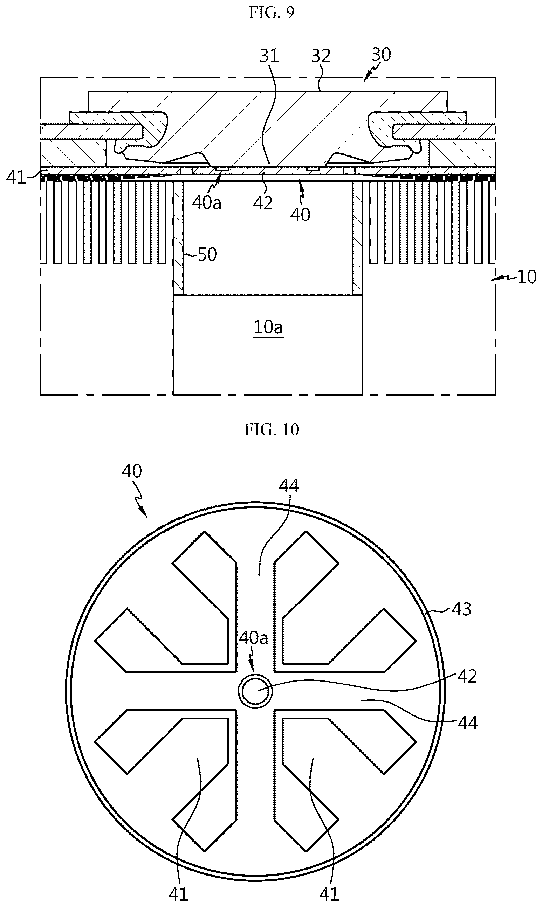

Next, a protection member 50 of the present disclosure will be described with reference to FIG. 9. FIG. 9 is a drawing showing a battery to which the protection member of the present disclosure is applied.

Referring to FIG. 9, the battery 1 of the present disclosure may include a protection member 50 configured to cover an inner wall surface of the winding center hole 10a at an entrance of the winding center hole 10a facing the current collector 40. If the battery 1 of the present disclosure includes the protection member 50 as described above, when a foreign substance generated during rupture of the resistance increasing region 40a enters the winding center hole 10a, the risk of damage to the separator positioned on the inner wall surface of the winding center hole 10a by the foreign substance may be reduced.

The protection member 50 may be configured to cover only a part of the entire region of the inner wall surface of the winding center hole 10a. The protection member 50 may be configured to cover only a region adjacent to the current collector 40 among the entire region of the inner wall surface of the winding center hole 10a. With this configuration, the phenomenon that impregnation of the electrolyte through the inner wall surface of the winding center hole 10a is hindered may be minimized.

Next, an exemplary form of the current collector 40 of the present disclosure will be described with reference to FIG. 10. FIG. 10 is a drawing showing an exemplary form of the current collector (first current collector) of the present disclosure.

Referring to FIG. 10, the current collector 40 of the present disclosure may have a structure in which the first coupling portion 41 and the second coupling portion 42 described above are spaced apart from each other along the radial direction. The current collector 40 of the present disclosure may include a rim portion 43 positioned on an outer periphery of the first coupling portion 41 and the second coupling portion 42. The current collector 40 may include a connection portion 44 configured to connect the rim portion 43 and the second coupling portion 42. If the first coupling portion 41 and the second coupling portion 42 are not directly connected to each other but are indirectly connected through the rim portion 43 in this way, the shock applied to the battery 1 may be dispersed. That is, it is possible to minimize the shock applied to the welding portion of the first coupling portion 41 from being transmitted to the welding portion of the second coupling portion 42, and it is also possible to minimize the shock applied to the welding portion of the second coupling portion 42 from being transmitted to the first coupling portion 41.

Next, with reference to FIG. 11, a lower portion of the battery 1 according to an embodiment of the present disclosure will be described. FIG. 11 is a drawing showing the structure of a lower portion of the battery according to an embodiment of the present disclosure.

Referring to FIG. 11, the battery 1 according to an embodiment of the present disclosure may include a current collector (second current collector) 60. The current collector 60 may be configured to electrically connect the electrode assembly 10 and the battery housing 20. The current collector 60 may be electrically connected to the second electrode of the electrode assembly 10. The current collector 60 may be electrically coupled to the second uncoated portion 12 provided on the second surface of the electrode assembly 10. The current collector 60 may be electrically coupled to the inner surface of the battery housing 20. The current collector 60 may be electrically coupled to the beading portion 21 formed by press-fitting an outer circumference of the battery housing 20.

The battery 1 may include a cap 70. The cap 70 may be configured to close the open portion of the battery housing 20. The cap 70 may be fixed by a crimping portion 22 configured to extend and bend from the beading portion 21 of the battery housing 20 and surround a peripheral edge of the cap 70. A sealing member (second sealing member) G2 may be interposed between the cap 70 and an inner surface of the battery housing 20. The cap 70 may include a venting portion 71 configured to be weaker compared to the remaining region. The venting portion 71 may be configured to partially reduce a thickness of the cap 70. The venting portion 71 may be configured to rupture when an internal pressure of the battery 1 increases to a predetermined pressure or more.

Next, a battery pack 3 according to an embodiment of the present disclosure will be described with reference to FIG. 12. FIG. 12 is a diagram showing a battery pack according to an embodiment of the present disclosure.

Referring to FIG. 12 along with FIGS. 1 and 11, the battery pack 3 according to an embodiment of the present disclosure may include the battery 1 according to an embodiment of the present disclosure and a pack housing 2 configured to accommodate the battery 1. The battery 1 may be provided in plurality, and the plurality of batteries 1 may be electrically connected to each other. The battery 1 of the present disclosure may be configured so that the battery terminal 30 and the closed portion of the battery housing 20 may function as a first electrode terminal and a second electrode terminal, respectively. Therefore, when arranging a plurality of batteries 1 in the pack housing 2, all batteries 1 may be arranged so that the terminals 30 face upward, and thus electrical connection may be made at the top of the batteries 1.

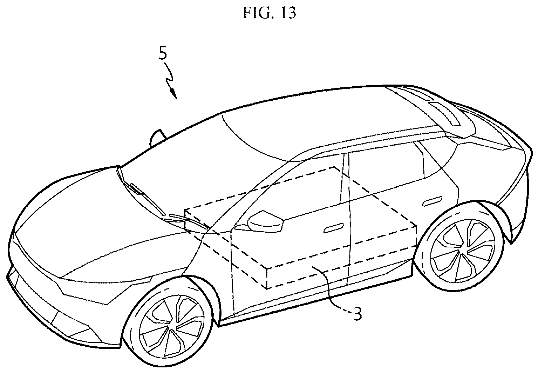

Next, a vehicle 5 according to an embodiment of the present disclosure will be described with reference to FIG. 13. FIG. 13 is a drawing showing a vehicle according to an embodiment of the present disclosure.

Referring to FIG. 13, the vehicle 5 according to an embodiment of the present disclosure may include the battery pack 3 according to an embodiment of the present disclosure. The vehicle 5 may be configured to operate by receiving power from the battery pack 3. The vehicle 5 may be, for example, an electric vehicle or a hybrid electric vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Reference Signs]

1: battery
2: pack housing
3: battery pack
5: vehicle
10: electrode assembly
20: battery housing
30: battery terminal
40: current collector (first current collector)
40a: resistance increasing region
L: groove line
50: protection member

## Claims

1. A battery comprising:
an electrode assembly;
a battery housing configured to accommodate the electrode assembly through an open portion formed at one side thereof;
a battery terminal configured to be electrically connected to the electrode assembly through a closed portion formed at a side opposite to the open portion of the battery housing; and
a current collector having a first coupling portion electrically coupled to the electrode assembly and a second coupling portion electrically coupled to the battery terminal and having a resistance increasing region formed in at least a part thereof.

2. The battery according to claim 1,
wherein the resistance increasing region is configured to have a smaller cross-sectional area compared to the remaining region of the second coupling portion.

3. The battery according to claim 1,
wherein the resistance increasing region is configured to have a thinner thickness compared to the remaining region of the second coupling portion.

4. The battery according to claim 1,
wherein the resistance increasing region includes a groove line formed on one surface or both surfaces of the second coupling portion.

5. The battery according to claim 4,
wherein the groove line extends along a circumferential direction of the battery.

6. The battery according to claim 1,
wherein the resistance increasing region includes a plurality of groove lines formed on one surface or both surfaces of the second coupling portion, and
wherein the plurality of groove lines are spaced apart from each other along a radial direction of the battery.

7. The battery according to claim 1,
wherein the resistance increasing region includes a plurality of groove lines formed on one surface or both surfaces of the second coupling portion, and
wherein the plurality of groove lines are spaced apart from each other along a circumferential direction of the battery.

8. The battery according to claim 1,
wherein a welding portion is provided in a region where the second coupling portion and the battery terminal are coupled, and
wherein the welding portion is provided in a region where the resistance increasing region is not formed.

9. The battery according to claim 1,
wherein a welding portion is provided in a region where the second coupling portion and the battery terminal are coupled, and
wherein the resistance increasing region is configured to surround the welding portion.

10. The battery according to claim 1,
wherein the electrode assembly has a structure in which a stack including a first electrode, a second electrode, and a separator interposed between the first electrode and the second electrode is wound, and
wherein the resistance increasing region is provided at a position corresponding to an inner side of a winding center hole formed due to winding of the electrode assembly.

11. The battery according to claim 10, further comprising:
a protection member configured to cover an inner wall surface of the winding center hole at an entrance of the winding center hole facing the current collector.

12. The battery according to claim 1,
wherein the first coupling portion and the second coupling portion of the current collector are positioned apart from each other along a radial direction of the battery.

13. The battery according to claim 1,
wherein the current collector includes:
a rim portion positioned on an outer periphery of the first coupling portion and the second coupling portion; and
a connection portion configured to connect the rim portion and the second coupling portion.

14. A battery pack comprising the battery according to any one of claims 1 to 13.

15. A vehicle comprising the battery pack according to claim 14.
